# EUROPEAN PATENT SPECIFICATION

(11) **EP 1 491 940 B1**
(45) Date of publication and mention of the grant of the patent: **06.06.2007**
(21) Application number: 03712814.7
(22) Date of filing: 20.03.2003
(51) Int. Cl.: G02F 1/13357

(54) **LIQUID CRYSTAL DISPLAY DEVICE**
FLÜSSIGKRISTALLANZEIGEVORRICHTUNG
DISPOSITIF D'AFFICHAGE A CRISTAUX LIQUIDES

(30) Priority: 28.03.2002 JP 2002091239; 24.05.2002 JP 2002151019; 11.11.2002 JP 2002326678
(43) Date of publication of application: 29.12.2004
(73) Proprietor: SANYO ELECTRIC CO., LTD., Moriguchi-shi, Osaka-fu 570-8677 (JP); Tottori Sanyo Electric Co., Ltd., Tottori-shi, Tottori 680-8634 (JP)
(72) Inventor: HIRAO, Kenji Tottori Sanyo Electric Co., Ltd., Tottori-shi, Tottori 680-8634 (JP); TSUBAKI, Yuichi Tottori Sanyo Electric Co., Ltd., Tottori-shi, Tottori 680-8634 (JP); KISHIDA, Keiichi Tottori Sanyo Electric Co., Ltd., Tottori-shi, Tottori 680-8634 (JP); HASHINO, Naruo Tottori Sanyo Electric Co., Ltd., Tottori-shi, Tottori 680-8634 (JP); NISHIO, Toshiya Tottori Sanyo Electric Co., Ltd., Tottori-shi, Tottori 680-8634 (JP); NISHIMOTO, Takuya Tottori Sanyo Electric Co., Ltd., Tottori-shi, Tottori 680-8634 (JP)
(74) Representative: HOFFMANN EITLE
(86) International application number: PCT/JP2003/003473
(87) International publication number: WO 2003/083565

(56) References cited:
- JP-A- 11 133 420
- JP-A- 2002 090 736
- US-A- 4 727 285
- PATENT ABSTRACTS OF JAPAN vol. 2002, no. 07, 3 July 2002 (2002-07-03) & JP 2002 090736 A (TOSHIBA CORP), 27 March 2002 (2002-03-27)
- PATENT ABSTRACTS OF JAPAN vol. 1999, no. 10, 31 August 1999 (1999-08-31) -& JP 11 133420 A (HITACHI LTD), 21 May 1999 (1999-05-21)

## Description

### TECHNICAL FIELD

The present invention relates to a liquid crystal display device preferably intended for a large-sized screen, particularly to a liquid crystal display device in which the incidence of mechanical torsion or bending in each component thereof and during the assembly of its components or error in mounting such components is prevented, due to their increase in size and weight in proportion to the increase in size of the display screen, and thereby eliminate any adverse effect to the quality of display and cost reduction is achieved by using outer frames whose waste material can be reduced during formation.

### BACKGROUND ART

A typical liquid crystal display device generally consists of 1) a liquid crystal display panel that displays images, 2) an optical member made from the laminated body of a diffusion plate, 3) a light-collecting sheet material provided on the rear surface of the liquid crystal display panel, 4) a backlight unit disposed on the rear surface of the optical member, 5) a main body case that houses and holds the backlight unit, and a metal case for shielding the liquid crystal display panel, and the like.

In this type of liquid crystal display device, the size and weight of each component constituting the device increases as the display screen is made larger, such that mechanical torsion or bending of each component and during the assembly of such components occurs, which inevitably adversely affects the quality of display. Various kinds of devices have been suggested to solve these problems.

For example, Japanese Patent Laid-Open No. 2002-23648 refers to a liquid crystal display device in which a plurality of light source lamps such as cold cathode tubes are housed in the main body case, and the display panel is placed over the optical member after the optical member is disposed in the opening of the liquid crystal display device, and the display panel is encased by a frame member divided into a number of pieces, to prevent the display panel from being dropped or from breaking and to achieve cost reduction.

However, to form larger versions of the said type of liquid crystal display panel, the size of its components, particularly the optical member and the backlight unit likewise increases, giving rise to the problem of improving the dimensional accuracy of components at the time of manufacture. In other words, it has become difficult to manufacture components having a high degree of dimensional accuracy, resulting in increased costs due to reduction in the yield of components or difficulty of assembly. Further, there have been cases where erroneous formulation of the dimensions of the backlight unit and the liquid crystal display panel became evident and sometimes it became impossible to find ways and means for the mechanical support of the liquid crystal display panel.

Furthermore, due to its own weight or the method employed to support the liquid crystal display panel or the optical member, torsion or bending occurs during assembly of components to produce the device or even during use thereof, as to make illumination of the liquid crystal display panel uneven or cause damage thereto when external pressure, such as a large impact is applied.

Moreover, gaps between components of the assembly permit dirt, dust and the like to settle therein, making it difficult for users to view and appreciate the image displayed through the liquid crystal display panel. Further, still, since the degree of brightness and quality of tint of such light emanating from gaps between components of the assembly differ from those of the image, users are put to discomfort while in the process of viewing the image when specks of such light leak out of the panel.

Further, larger sizes of the liquid crystal display device described in Japanese Patent Laid-Open No. 11(1999)-146305 can be manufactured and provided with a frame that easily fits display panels of various dimensions. The display panel according to the said invention has a flat plate shape and the frame thereof consists of horizontal frames joining the upper and lower peripheral portions of the display panel and vertical frames joining the right and left peripheral portions of the display panel, while the horizontal frames and the vertical frames are joined together via corner members provided at the corner portions of the display panel.

However, since the liquid crystal display device requires the presence of corner members at the joint of each frame, additional components are likewise necessary, and due to its complicated shape, production of the corner member is difficult, consequently making assembly of the components and wielding control thereof quite troublesome. Further, since the liquid crystal display panel is adhered and affixed to the frame using horizontal and vertical frames by means of a double-sided adhesive agent, there are also problems associated with adhesion and assembly as well as maintenance. In other words, it is impossible to assemble a large-sized display panel firmly.

Furthermore, in the liquid crystal display device described in Japanese Patent Laid-Open No. 11(1999)-160681, Japanese Patent Laid-Open No. 11(1999)-305205, etc., the liquid crystal display panel and the backlight unit are affixed together by means of a metal outer frame.

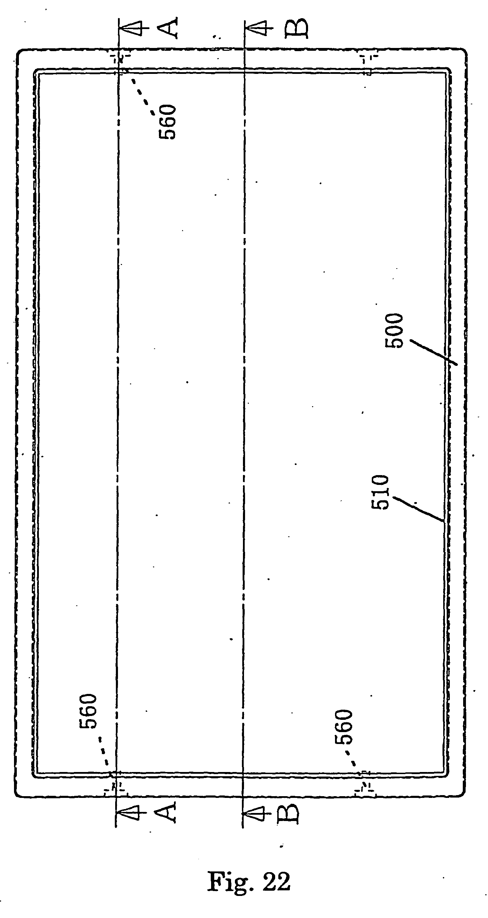

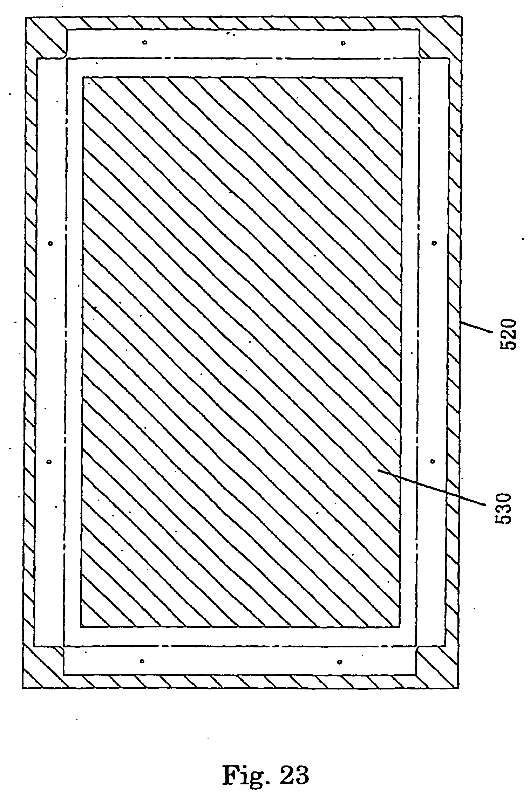

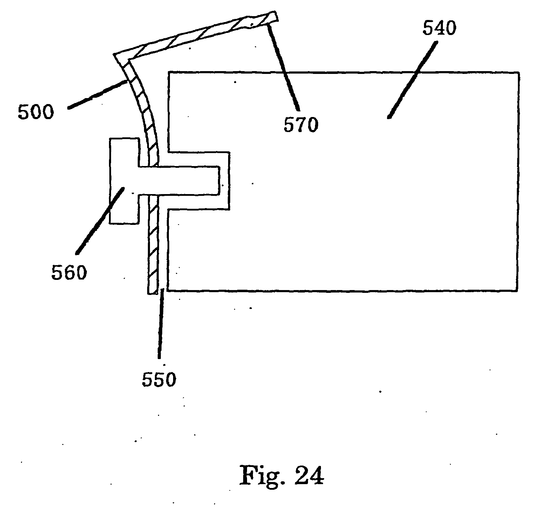

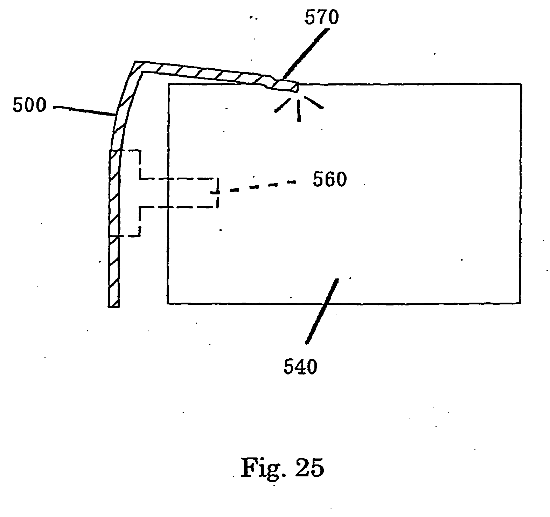

Figs. 22 to 25 respectively illustrate the prior art, in which Fig. 22 is a front view of the outer frame, Fig. 23 is a plane view of the finished (manufactured) outer frame, Fig. 24 is a sectional view at A-A of Fig. 22, and Fig. 25 is a sectional view at B-B of Fig. 22.

As shown in Fig. 22, since an outer frame 500 is formed in the shape of a picture frame by die-cut presswork and the like from a flat-shaped plate material 520 (shown in Fig. 23), where a window opening 510 is formed at the central portion thereof, a portion 530 from which the window opening 510 is die-cut (also shown in Fig. 23) merely becomes waste material, resulting in high cost of production.

Further, since the outer frame 500 is flat and rectangular, and the entire body of the display panel is integrally formed, provision for a clearance 550 is necessary to absorb the dimensional error in the inner support frame 540, to which the outer frame 500 is affixed by means of the screws 560. When the outer frame 500 is fastened to the inner components by the screws 560, portions to which the screws are fastened are deformed inwardly due to the clearance 550. As shown in Fig. 25, distortion likewise occurs in the entire outer frame 500, in that an edge portion 570 of the window opening 510 is vertically deformed, thereby adversely affecting the quality of display and the like of the liquid crystal display panel.

JP 2002-090736 describes a device according to the preamble of claim 1.

### DISCLOSURE OF THE INVENTION

The present invention aims to solve the above-described problems.

The first object of the present invention is to provide a firmly assembled liquid crystal display device with improved display quality notwithstanding its increase in shape and weight relative to the enlargement of the display screen, by eliminating the mechanical deformation of its components as well as mechanical deformation during assembly, by way of twist, distortion and the like

The second object of the present invention is to provide a liquid crystal display device with improved display quality by closing the gaps formed during component assembly to prevent intrusion of foreign objects such as dirt and dust and to eliminate leakage of light.

The third object of the present invention is to provide a less expensive liquid crystal display device by using outer frames that can be formed without leaving large amounts of waste material.

These objects are solved by means of a liquid crystal display device according to claim 1.

This aspect of the invention assumes that in the case of typical larger liquid crystal display devices, the components involved are also larger and heavier, such that twisting and distortion thereof and the like easily occur in a normal frame (which is a previously integrally formed frame), during vibration and the like, since the frame cannot firmly hold the components together, and therefore the possibility of occurrence of a large slippage and the like arises in the optical member. However, the use of the above-described reinforcing frames makes it possible to firmly assemble the optical member, the backlight unit and the like to the main body case, despite being large and heavy. In addition, since the divided reinforcing frames are joined directly, providing for corner members with which to connect them is unnecessary. Further, even though the frame consists of a plurality of frames, the unit price of each component is lower while enhancing dimensional accuracy thereof, thereby ensuring lower cost and robustness.

Further, in this aspect of the invention, it is preferable that the optical member has a light leakage preventive structure where the surface side edge of its outer periphery is covered by the reinforcing frames, and the joints of the reinforcing members are respectively provided with a light leakage preventive structure where the end portions of the reinforcing frames come into contact to each other.

In addition, the gaps forming in the joints between components are sealed to prevent the leakage of light and the intrusion of foreign objects such as dirt and dust.

Further, it is preferable that a thick and transparent reinforcing plate be disposed on the rear surface of the optical member.

Further, since the transparent and thick reinforcing plate is provided at the opening of the main body case and affixed to the reinforcing frames, the reinforcing plate does not become shaky, promoting robustness of the lighting system, and matching with the liquid crystal display panel becomes better.

Further still, it is preferable that the liquid crystal display panel be affixed to an assembled liquid crystal display device by means of the reinforcing frames and attached to the main body case by means of the outer frame divided into a number of frames.

Likewise, in this aspect of the invention, by constituting the outer frame in the shape of a picture frame covering the periphery of the liquid crystal display panel, in divided frames, no gap is required to be provided between the outer frame and the supporting means for affixing the same, and thus stress-causing distortion in the outer frame will not occur when it is affixed to the supporting means by screws and the like. In this manner, any adverse effect to the quality of display of the display panel due to the occurrence of stress may be avoided. Further, when the outer frame is formed by die-cutting a plate material from metal plate material, the amount of waste material is drastically reduced, thereby cutting production cost. Additionally, when the liquid crystal display panel is constituted in rectangular form, different plate materials of varied sizes can be used to produce the upper and lower outer frames and the right and left outer frames, and thus the amount of waste material after die-cutting the plate material is reduced, and production cost can thus be scaled down further. Further, still, by connecting the outer frames to each other after being affixed to the supporting means, the outer frames and the supporting means are securely fixed without any clearance, as to prevent the frames from being deformed due to the presence of such clearance.

Further, it is preferable to provide for a lamp-supporting stage for the backlight unit at the open end of the main body case and a middle member on the lamp-supporting stage, and to affix the optical member to the main body case by means of the reinforcing frames.

Further still, it is preferable that the side walls of the main body case and the side walls of the middle member be made to form a chamber of a predetermined size by creating a periphery for each side wall, housing the backlight unit in the chamber, and installing the outer periphery of the assembly to the reinforcing frame after providing for peripheral ends for the optical member on each side wall, so that the different components of the liquid crystal display device such as the main body case can be solidly constructed and the optical member can be firmly affixed to the main body case. In this manner, it would be possible to remove the backlight unit easily from the assembly without dismantling the optical member on purpose.

### BEST MODE FOR CARRYING OUT THE INVENTION

Several embodiments of the present invention will be described as follows with reference to the drawings.
Fig. 1 is the external perspective view of an embodiment of the liquid crystal display device of the present invention.
Fig. 2 is an exploded perspective view of Fig. 1.
Fig. 3 is an enlarged perspective view of a corner A in Fig. 1.
Fig. 4 is an exploded perspective view of Fig. 3.
Fig. 5 is the external perspective view of another embodiment of the liquid crystal display device of the present invention.
Fig. 6 is an exploded perspective view of Fig. 5.
Fig. 7 is an enlarged perspective view of a corner D in Fig. 5.
Fig. 8 is an exploded perspective view of Fig. 7.
Fig. 9 are upper and lower sectional views of a liquid crystal display device.
Fig. 10 is a left sectional view of the liquid crystal display device illustrated in Fig. 9.
Fig. 11 is a right side view of the device illustrated in Fig. 9.
Fig. 12 is an exploded perspective view of the device illustrated in Fig. 9 viewed from the rear surface thereof.
Fig. 13 is a component perspective view of the liquid crystal display device (Fig. 12) illustrated in Fig. 9.
Fig. 14 is an enlarged sectional view of the principal part of the guide portion of the device illustrated in Fig. 9.
Fig. 15 illustrates sectional views at A-A and B-B of Fig. 14.
Fig. 16 is a front view of another embodiment of the liquid crystal display device of the present invention.
Fig. 17 is a perspective view of the embodiment illustrated in Fig. 16.
Fig. 18 is a sectional view at C-C of Fig. 16.
Fig. 19 is an exploded perspective view of the outer frame illustrated in Fig. 16.
Fig. 20 is a plane view of the process involving the manufacture of the outer frame shown in Fig. 16.
Fig. 21 is also a plane view of the process involving the manufacture of the outer frame shown in Fig. 16.

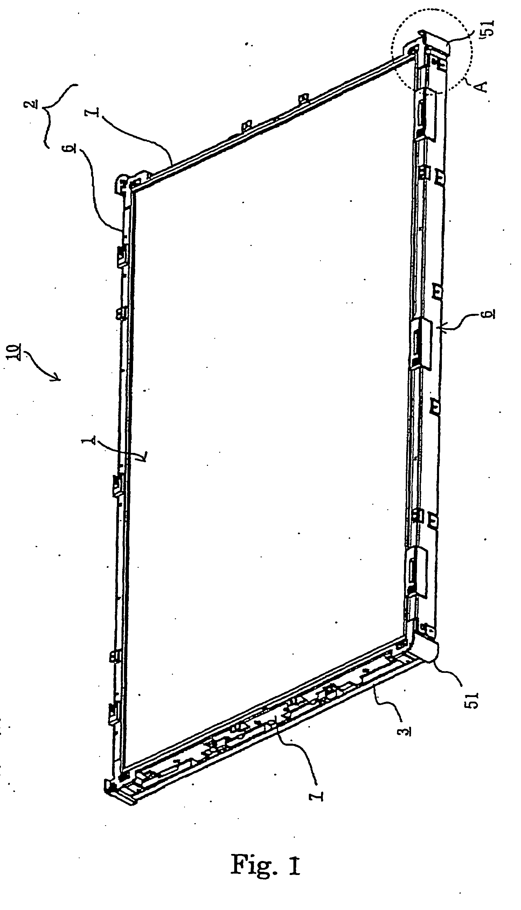

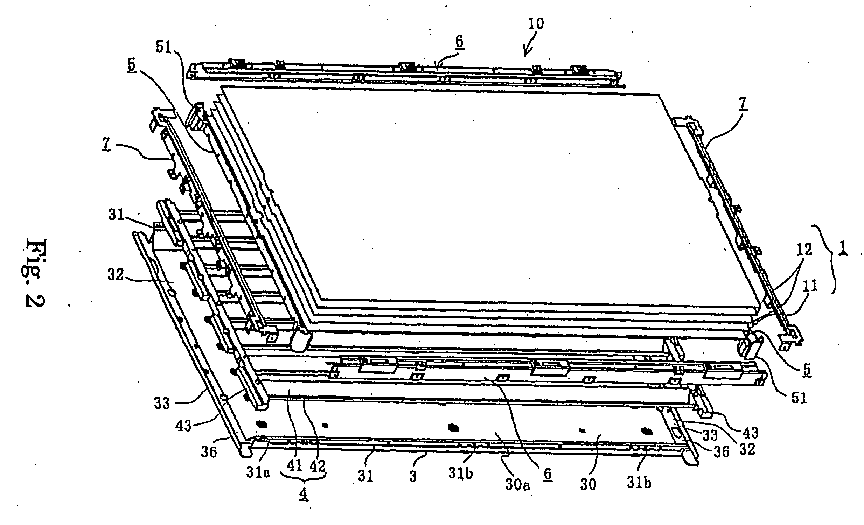

In the embodiment illustrated in Figs. 1 to 4, a liquid crystal display device 10 has a main body case 3, a backlight unit 4 housed in the main body case 3, an optical member 1 placed over the surface to align with both side edges of the main body case 3 while covering the backlight unit 4, such that after the optical member 1 is affixed to both of the side wall surfaces of the main body case 3 where the backlight unit 4 is housed, and reinforcing frames 2 are affixed to the periphery of the optical member 1 and joined at corners as if to form a picture frame, the liquid crystal display panel is placed over the optical member 1, and its outer periphery is encased by an outer frame. Note that the liquid crystal display panel and the outer frame are not illustrated in the drawings.

Each of the components such as the optical member 1, the reinforcing frame 2 and the main body case 3 will hereafter be described in detail.

The optical member 1 comprises a light diffusion plate 11 having substantially the same rectangular shape as the liquid crystal display panel and a number of light-collecting sheets 12 laminated to the upper surface of the light diffusion plate 11.

The main body case 3 housing the backlight unit 4 has side walls 31, 31 to which both of the side edges of the optical member 1 are respectively placed while covering the backlight unit 4, open portions 32, 32 and a relatively wide U-shaped bottom wall 30, and is made of metal. The bottom wall 30 is wide and flat, with both of its side edges substantially bent to 90 degrees in the longitudinal direction to form the side walls 31, 31 of a predetermined height, and steps 31a, 31a are formed on each side wall 31, 31 into which the optical member 1 is placed. Further, the open ends 32, 32, on which the side walls 31, 31 were not formed, are extended in the longitudinal direction to form spaces 33, 33 to which the lamp-supporting stages 43, 43 are installed. Note that 31b, 31b represent engaging grooves.

The backlight unit 4 comprises a reflective plate 41 provided on the inner wall of the main body case 3, a plurality of light source lamps 42 disposed in the longitudinal direction of the reflective plate 41 at predetermined intervals, and a pair of lamp-supporting stages 43, 43 affixed to the light source lamps 42 in such manner that the lamp-supporting stages 43, 43 respectively reside on the spaces 33, 33 on both ends of the main body case 3.

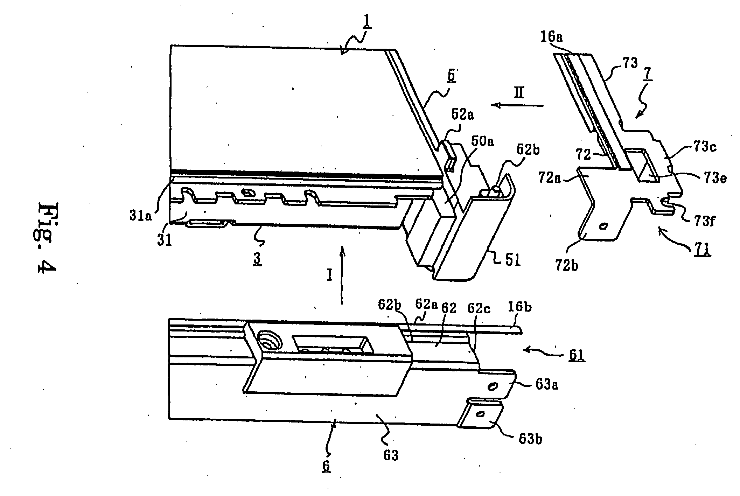

The middle member 5, which is placed on the lamp-supporting stages 43, 43, closes the open ends 32, 32 of the main body case 3 and firmly installs the backlight unit 4 in the main body case 3, thus forming the side walls on the open ends 32, 32. The middle member 5, which is formed by resin molding, is substantially prismatic in shape having substantially the same length as those of side ends 36, 36 of the main body case 3. The bottom wall is designed to be placed/fixed on the lamp-supporting stages 43, 43 and steps 50a, 50a, on which the side wall edges of the optical member 1 are respectively placed and formed on an upper wall surface in the longitudinal direction (Fig. 4 shows the step 50a of one middle member), while corners 51, 51 are integrally formed on both ends. As shown in Fig. 4, each corner 51, 51, is a square block body slightly larger than the central prismatic portion, and particularly functions to ensure the firm attachment of the reinforcing frames 2, while protrusions 52a, 52b are formed on its upper surface.

The middle member 5 constitutes a part of the side walls closing the open ends 32, 32 of the main body case 3. Then, the outer periphery of the main body case 3 is surrounded by each side wall 31, 31 and the middle member 5, and a chamber 30a of a predetermined size having the bottom wall 30 is formed. Thereafter, when the periphery of the optical member 1 is made to reside on the steps 31a, 31a and steps 50a, 50a of each side wall and encased by the reinforcing frame 2 after the backlight unit 4 is housed in the chamber 30a, the backlight unit 4 and the optical member 1 are firmly installed in the main body case 3.

The reinforcing frame 2 comprises a pair of reinforcing frames 6, 6 (hereinafter referred to as the first reinforcing frames) that firmly encase the longer side portion of the outer periphery of the assembly, where the optical member 1 is placed on the main body case 3, and a pair of reinforcing frames 7, 7 (hereinafter referred to as the second reinforcing frames) that firmly encase the shorter side portion of the outer periphery of the assembly, which is formed by bending the metal plate to become L-shaped. Joints 61, 71 that join reinforcing frames 6, 7 are integrally formed on both ends of the first and second reinforcing frames 6, 7.

As shown in Fig. 4, the first reinforcing frame 6 is L-shaped consisting of a short side 62 and a long side 63, where the short side 62 has a side edge 62a of such length covering a portion of the side end edge of the optical member 1 in its longitudinal direction during assembly. Note that a step 62b is formed, if necessary, on the shorter side of the outer periphery of the assembly to ensure contact with the side edge of the optical member 1. Further, the long side 63 has a length covering the side wall 31 of the main body case 3.

Furthermore, as shown in Fig. 4, the joint 61 of the first reinforcing frame 6 comprises a cut portion 62c which is formed by partially cutting the tip portion of the short side 62 at the side edge, and attaching pieces 63a, 63b extending from the long side 63. The cut portion 62c is cut in such shape as to enable the installation of the joint member (described later) to the second reinforcing frame 7. Further, tap holes are formed in the attaching pieces 63a, 63b. Note that 16b represents an elastic insulating tape adhered to the side edge of the short side 62.

As shown in Fig. 4, the joint 71 of the second reinforcing frame 7 is L-shaped consisting of a short side 72 and a long side 73, where the length of the short side 72 is such that a side edge in its longitudinal direction covers a part of the side end edge of the optical member 1 during assembly. Further, the end portion of the short side 72 is formed wide, in which the side end of one wide piece 72a is bent so as to drop downward to form an attaching piece 72b. The long side 73 is of such length as to cover the open end 32 of the main body case 3 and an opening 73e and a groove 73f are formed on the wide piece 73c. Note that 16a represents an insulating tape adhered to the side edge of the short side 72 as well as 16b.

The abovementioned components are assembled in the following order.

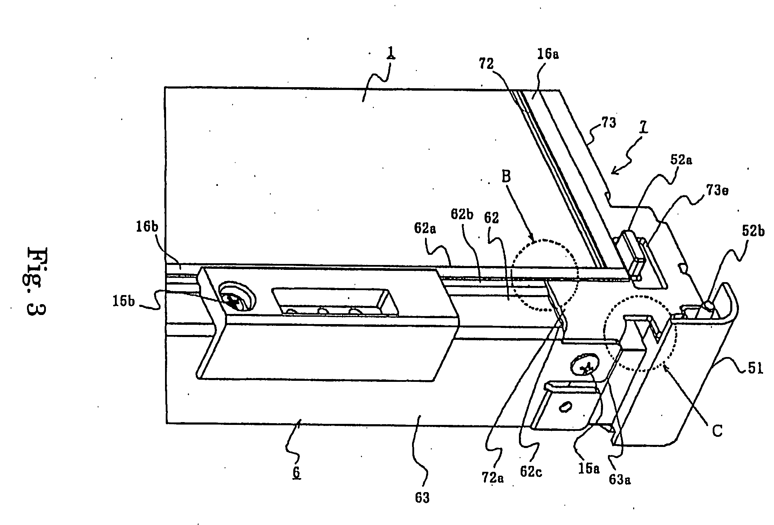

Referring to Figs. 1 to 4, the backlight unit 4 and the pair of lamp-supporting stages 43, 43 are installed in the main body case 3 first, and the middle member 5 is disposed on the lamp-supporting stages 43, 43. Subsequently, the edges of the long side portion of the optical member 1 are placed on each step 31a, 31a of both side walls of the main body case 3. Then, as shown in Fig. 4, the first reinforcing frame 6 is moved from the direction of the arrow marked "I" towards the assembly, and the attaching piece 63a and the wide piece 72b of the second reinforcing frame 7 are joined together by installing a screw 15a into the tap holes. A screw 15b is further screwed to the tap hole of the side edge of the main body case 3 and the through hole of the first reinforcing frame 6 to unite it with the latter, as shown in Fig. 3.

Furthermore, the second reinforcing frame 7 is moved from the direction of the arrow marked "II" towards the side surface of the middle member 5, while the protrusion 52a is made to fit into the opening 73e, and the groove 73f is engaged to the protrusion 52b, and thus united with the middle member 5.

In this manner, where the backlight unit 4 is housed in the main body case 3 and the optical member 1 is mounted thereon, the assembly is firmly encased by the first reinforcing frame 6 and the second reinforcing frame 7. Specifically, by making the middle member 5 lie between the side edge of the optical member 1 and the second reinforcing frame 7, the main body case 3, through the side wall formed by the side walls 31, 31 and the middle member 5 forms the chamber 30a, which has a predetermined size and is surrounded by each side wall 31, 31 at its periphery and in which the backlight unit 4 is housed, while the periphery of the optical member 1 is made to reside on the steps 31a, 31a, and the steps 50a, 50a of each side wall and encased by the reinforcing frame 2. Accordingly, the backlight unit 4 and the optical member 1 are firmly affixed to the main body case 3, thereby enhancing stability of the liquid crystal display device during transport. Further, still, it is possible to dissemble the device easily without dismantling the backlight unit 4 and the optical member 1.

Specifically, in this assembly, the outer periphery of the optical member 1 is surrounded by the side wall formed by the side walls 31, 31 and the middle member 5, and is placed on the steps 31a, 31a and the steps 50a, 50a of each side wall and encased by the reinforcing frame 2.

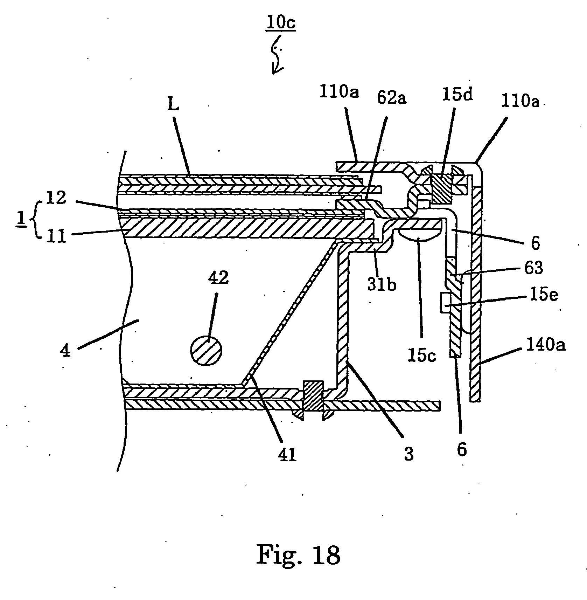

As shown in Fig. 18, the main body case 3 is joined with the first reinforcing frame 6 by a screw 15c. When the screw 15c is removed while the assembly is in this state, the main body case 3 can be easily detached from the reinforcing frame 6. Additionally, since the main body case 3 is attached to the reinforcing frame 7 by the same fixing means, it can be detached by simply disengaging the fixing means. Even if the main body case 3 is detached from the reinforcing frames 6, 7, the optical member 1 remains affixed to the middle member 5 and the first and second reinforcing frames 6, 7, so that it would not be dismantled. Thus, by removing the main body case 3, the light source lamps 42 and the like housed in the main body case 3 can be easily replaced.

Although provision for the middle member is made in the above-described embodiment of the liquid crystal display device, it may actually be omitted. Further, in the liquid crystal display device integrally assembled, power source and image signals are supplied to the light source lamps, as well as a control circuit (not shown) and the like, and images are displayed on the liquid crystal display panel.

By using the divided reinforcing frames 2, the above-described liquid crystal display device is capable of affixing the large-sized optical member, backlight unit, and the like firmly to the main body case 3. However, in the liquid crystal display device, there are cases where gaps are formed in the joints of the reinforcing frames depending on the structure or the quality of accuracy of the components involved, and light leaks from such gaps.

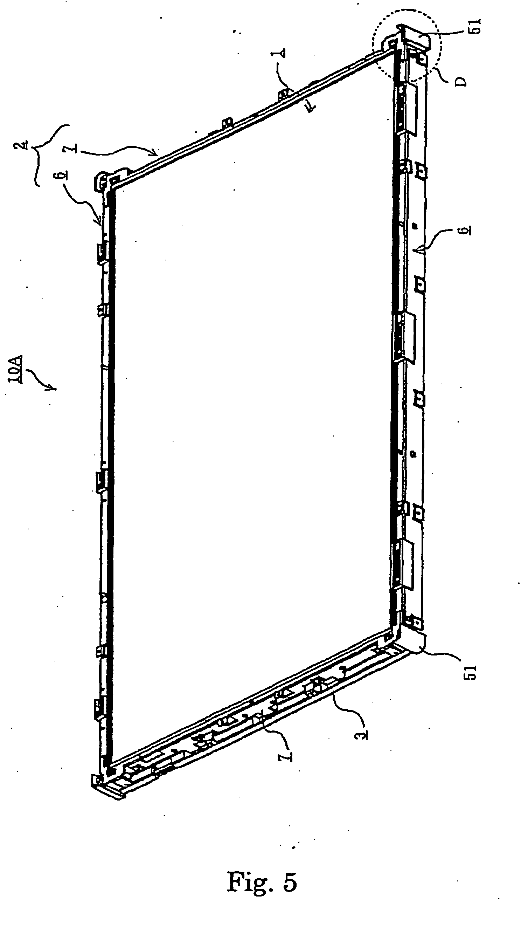

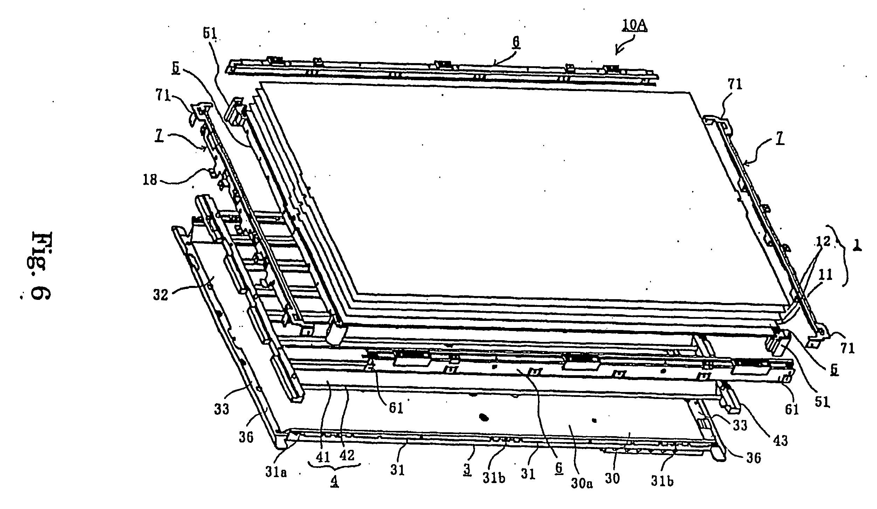

Another embodiment of the liquid crystal display device of invention illustrated in Figs. 5 to 8 in which such gaps created at the joints of reinforcing frames are closed to eliminate leakage of light will be described hereafter.

The structure of the liquid crystal display device 10A is basically the same as that of the above-described liquid crystal display device 10 of the first embodiment but the joints of its reinforcing frames are constructed differently. In describing the same herein below, the same numerals used in referring to the particular components of the device 10 have been adopted for the device 10A to avoid duplication of explanation.

In Fig. 3, the areas marked as B and C indicate where gaps could occur at the joints of the first and second reinforcing frames 6, 7. Since the other end portion, that is the edge of the peripheral end of the optical member 1 is placed and fixed on the side wall of the main body case 3 and the steps 31a, 31a and steps 50a, 50a of the middle member and is covered by the edges of the side end of the reinforcing frames 6, 7, gaps causing leakage of light do not form. In other words, to close the gaps forming in the B and C areas, the joints are made to form a closed structure. Although B and C areas exist at each corner of the assembly, only the area of one corner D in the liquid crystal display device 10A shown in Fig. 5 will be described. The closed structure at each junction 61, 71 is formed in the following manner.

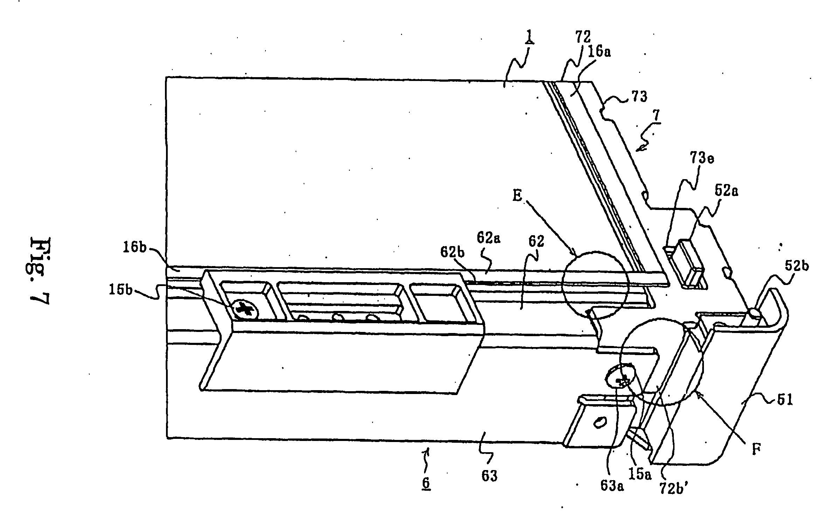

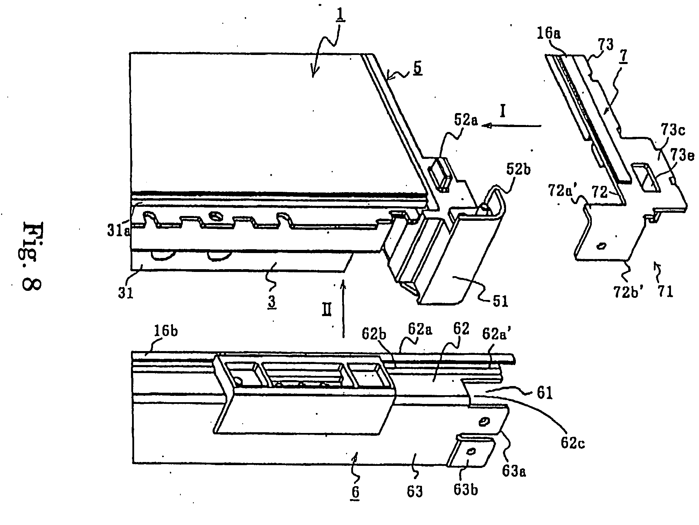

The embodiment of the liquid crystal display device of the invention illustrated in Fig. 4 is such that the tip portion of the short side 62 of the reinforcing frame 6 is cut all the way to the middle in order to accomodate the wide piece 72a of the second reinforcing frame 7 on the shorter side of the outer periphery of the assembly. In the embodiment of the liquid crystal display device of invention illustrated in Fig. 8. however, the short side 62 is extended without cutting its tip portion all the way to the middle such that the end portions of the side edge 62a and the step 62b come into contact with the side edge of the short side 72 of the second reinforcing frame 7 during assembly. By extending the side edge 62a and the step 62b in such manner, the side edge of the optical member 1 is consequently covered by the extended side edge 62a' and the step 62b, as shown in the area marked "E" in Fig. 7. Further, the cut portion 62c for receiving wide pieces 72a', 72b' of the second reinforcing frame 7 during assembly is formed on the short side 62.

On the other hand, in the second reinforcing frame 7 of the embodiment of the liquid crystal display device of the invention illustrated in Fig. 8, the wide piece 72a' is narrower (compared to the wide piece 72a of Fig. 4) so as to be inserted in the now narrower cut portion 62c after the side edge 62a' was formed, while the wide piece 72b' is now wider than the wide piece 72b of Fig. 4. The wider piece 72b' covers the gap with the reinforcing frame 6 at the joint when they are joined, so that light leakage can be also prevented as shown in the area marked "F" in Fig. 7.

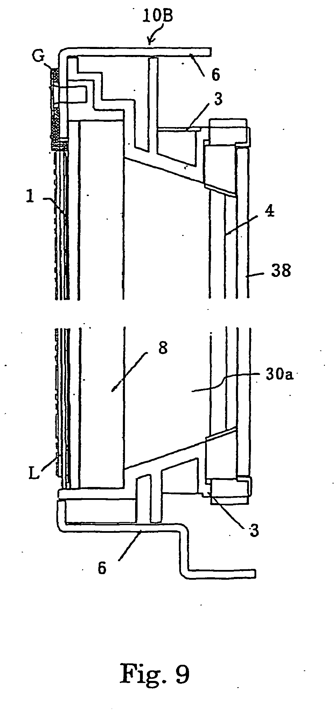

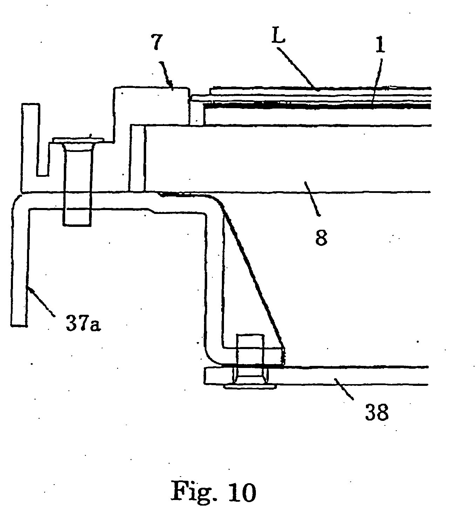

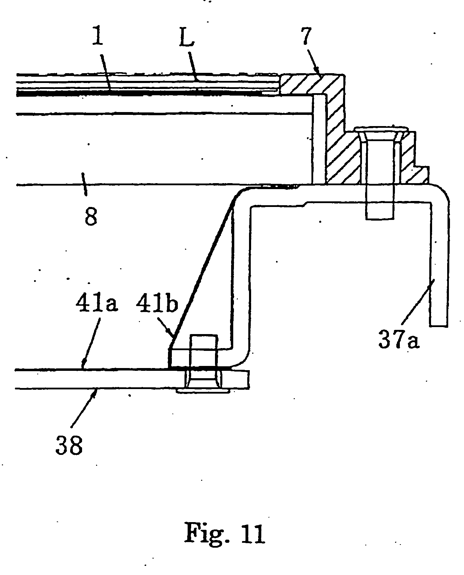

In another example of a liquid crystal display device shown in Figs. 9 to 15, a reinforcing plate is further annexed to affix the liquid crystal display panel, the optical member and the like firmly to the main body case, and the occurrence of distortion and bending is eliminated.

Since the constitution of the liquid crystal display device 10B differs from that of the liquid crystal display device 10 only with respect to the structure of the liquid crystal display panel and the optical member but is substantially similar thereto in other respects, supplemental explanation will be provided only for such differences. In describing the same herein below, the same numerals used in referring to the particular components of the device 10 have been adopted for the device 10B to avoid duplication of explanation.

The liquid crystal display device 10B has a main body case 3, a backlight unit 4 housed in the main body case 3, and an optical member 1 placed on the edges of both sides of the main body case 3 while covering the backlight unit 4, and where the optical member 1 is placed on the surface of both side walls of the main body case 3 in which the backlight unit 4 is housed, and reinforcing frames 6 and 7 are affixed to the outer periphery of the optical member 1 and joined at corners to form a picture frame, and furthermore, a liquid crystal display panel L is placed over the optical member 1, and its outer periphery is encased by an outer frame, as shown in Figs. 9, 12 and 13.

The main body case 3 has an opening for light irradiating from the light source lamps arrayed in large numbers to the liquid crystal display panel L (note that the said opening is represented by the upper opening of the chamber 30a, and will be referred to as the "Opening 30a" hereinafter), and is designed to house and support the backlight unit 4. Although the main body case 3 may be of such shape as to permit the joining of the upper and lower frame-shaped components at predetermined intervals, or boat-shaped without a bottom, it is preferable that the opening 30a be approximately square in shape relative to the liquid crystal display panel L. Further, the main body case 3 may be formed either by way of resin molding or metal processing.

Three pieces of lens sheet and one piece of light diffusion plate are laminated onto the optical member 1 attached to the opening 30a of the main body case 3. The lens sheet may either be a milk-white sheet or a light-diffusing-material-kneaded sheet. In either case, the sheet should be capable of diffusing light to the extent that the position of the backlight unit 4 cannot be observed and identified from the top as having intense light. Note that the rear surface of the main body case 3 in this embodiment is open, which open portion is closed by means of a rear lid 38. It should be also noted that the rear lid 38 may be integrally formed with the bottom wall of the main body case 3 such that the open portion need not be closed by means of the rear lid 38. Further, a bar or a frame for holding the light source lamps in the main body case 3, and a holding portion for the optical member 1 may be constituted as different components, or the main body case 3 may be constituted by a plurality of components.

Further, a transparent and thick reinforcing plate 8 is provided on the inside of the optical member 1 for the opening 30a of the main body case 3 so as to oppose the liquid crystal display panel L. The reinforcing plate 8 is made of transparent acrylic resin plate or the like of low reflectance grade and is shaped as to fit into the opening 30a. Since the reinforcing plate 8 is arranged in such manner as to oppose the liquid crystal display panel L, it can protect the display panel L from the adverse effect of external load and at the same time suppress flickering of the display screen due to vibration or impact.

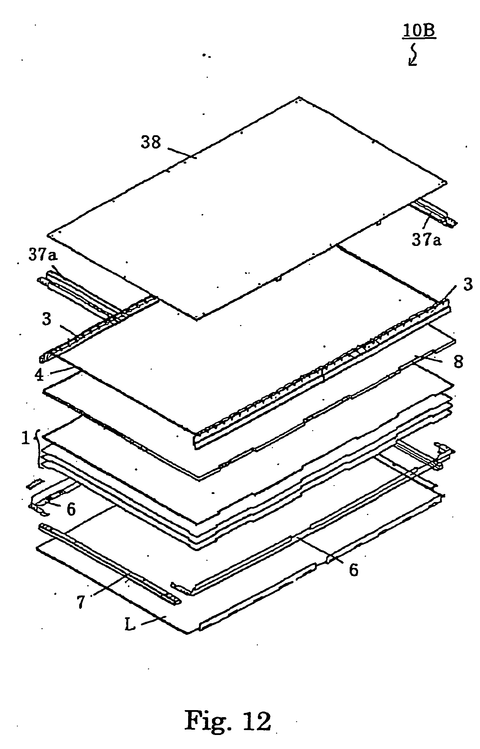

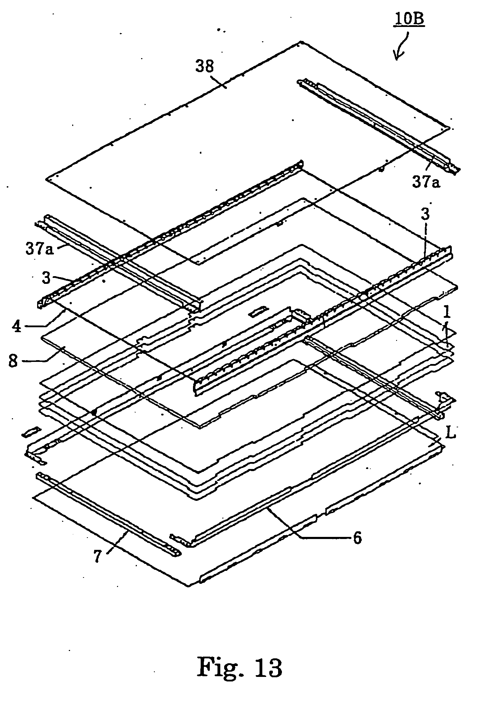

Referring to Figs. 12 and 13, reference numerals 6 and 7 represent the reinforcing frames for fastening the reinforcing plate 8 and the optical member 1 placed on the reinforcing plate 8 to the main body case 3 which is made of metal. The upper and lower reinforcing frames consist of a pair of reinforcing frames 6, 6, and both ends thereof are provided with joints and turn-back steps for supporting/fixing the optical member 1 and the reinforcing plate 8, which are designed to press against the main body case 3 to prevent the reinforcing plate 8 from shaking. An elastic tongue piece is preferably provided at the bottom as fixing means, but such means may be of such shape as to sandwich the reinforcing plate 8. Further, fixing means may also be provided for the right and left reinforcing frames 7, 7. With this constitution, the reinforcing plate 8 and the reinforcing frames 6, 7 can make the light source unit 4 robust and reduce the occurrence of distortion and bending of the liquid crystal display device. Furthermore, reference numerals 37a, 37a represent rear frames, while reference numeral 38 refers to the rear lid. It is further preferable to provide reflective films 41a, 41b inside the rear lid 38 or between the side surface and the rear surface of the main body case 3. As described, by constituting a number of frames, more preferably, by each bar, it is possible to improve the dimensional accuracy of each component and reduce production cost even when assembly man-hours is taken in consideration.

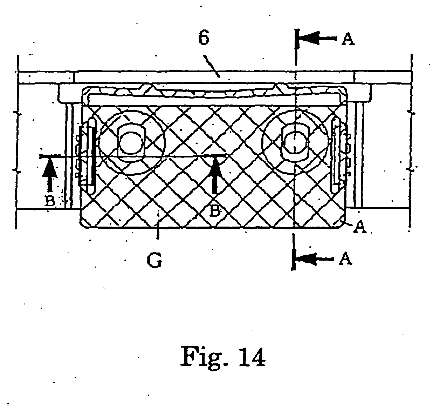

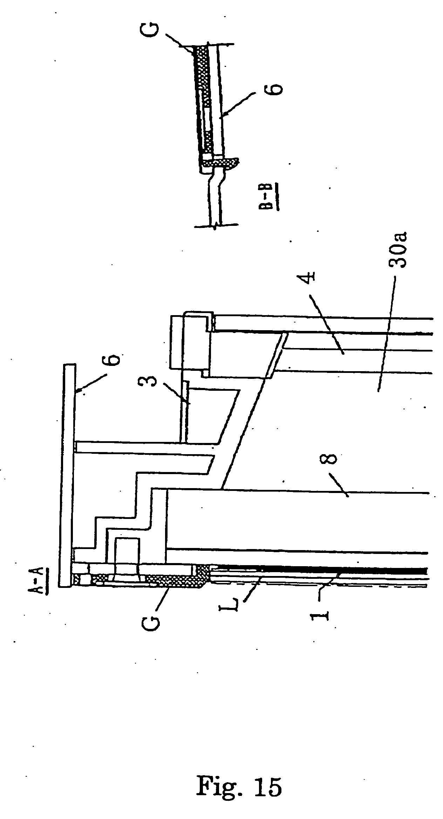

Further, referring to Figs. 14 and 15, reference code G represents an operating guide for the liquid crystal display panel L residing in the peripheral area of the opening 30a of the main body case 3, and it is intended to be operated smoothly by forming a through hole for fastening a screw of an approximately elliptical shape or by making the screw flat. Thus, the liquid crystal display panel L can be securely fixed with a large clearance even if its dimensions are modified. As such, an upper guide G may be constituted, for example, by an elastic body, to press and fix the liquid crystal display panel L.

The advantages of providing for the transparent and thick reinforcing plate in the opening 30a being fastened by the reinforcing frames are such that the reinforcing plate 8 is not easily shaken, the lighting system becomes robust; and matching with the liquid crystal display panel L becomes better. Furthermore, by constituting a plurality of frames, the unit price of each component is reduced while improving its dimensional accuracy, thereby entailing lower production cost. Additionally, since the guide of the liquid crystal display panel is provided in the peripheral area of the opening 30a in such manner as to be capable of sliding when operated, it can firmly support the glass substrate of the display device even if its size varies.

Although omitted in their explanatory drawings, after the liquid crystal display devices 10, 10A and 10B are assembled as described in the preceding paragraphs, the liquid crystal display panel is placed on the optical member and its outer periphery is encased by the outer frames.

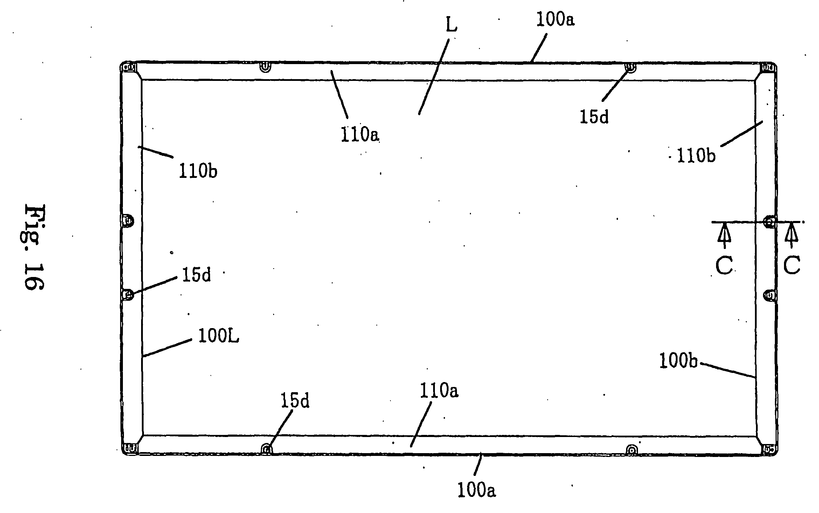

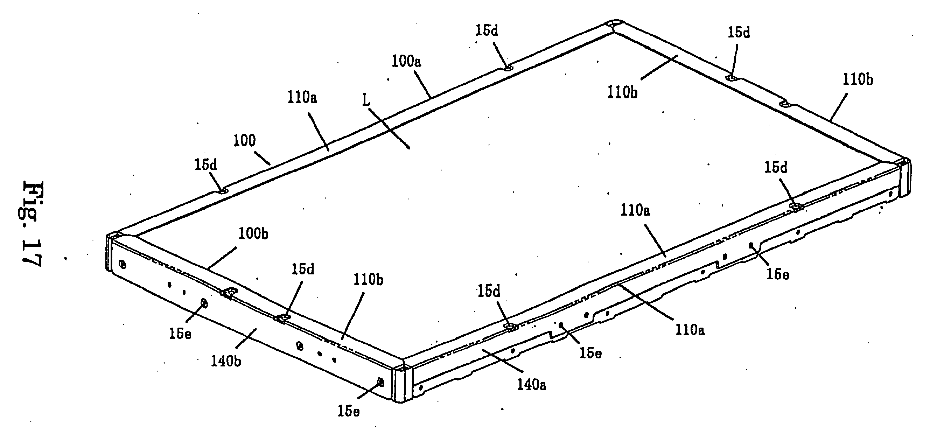

Another embodiment of the liquid crystal display device of the invention is illustrated in Figs. 16 to 21, which refers to a liquid crystal display device 10C equipped with outer frames which are manufactured without leaving substantial amounts of waste material.

The liquid crystal display device 10C consists of a main body case 3, an optical member 1 placed on the side walls of the main body case 3 while covering the opening 30a of the main body case 3, and a liquid crystal display panel L placed on the optical member 1 as shown in Fig. 18. The structural formation of the main body case 3, the optical member 1 and the liquid crystal display panel L of the liquid crystal display device 10C is similar to that of liquid crystal display devices 10, 10a and 10B and therefore supplemental description will be provided only for the components which distinguish it from the latter.

In the case of the liquid crystal display device 10C, a number of light-collecting sheets 12 made from transparent resin such as acrylic and polycarbonate are laminated on the front face of the light diffusion plate 11 of the optical member 1 with a thickness of about 2 to 3mm. Further, the liquid crystal display panel L is relatively large-sized and oblong in shape, with a diameter of 15-inches or more, for example, and is formed either as an STN liquid crystal display panel or a TFT liquid crystal display panel, both of which are suitable for a large screen.

Referring to Fig. 18, reference numeral 3 refers to the bottom portion of a box-shaped case, where the light-collecting sheets such as the light diffusion plate 11 and the like are arranged on the opening 30a, the reinforcing frame 6 consisting of sheet metal bent to be approximately L-shaped is fastened to the side wall 31b, which is integrally and outwardly formed by bending the rim of the opening 30a by means of the screw 15c, the side edge of the reinforcing frame 6 and the side wall 31b fasten the light-collecting sheets to the opening 30a, and the liquid crystal display panel L is placed on the front face of the side edge of the reinforcing frame 6, thereby constituting the supporting means mainly for the main body case 3 and the reinforcing frame 6.

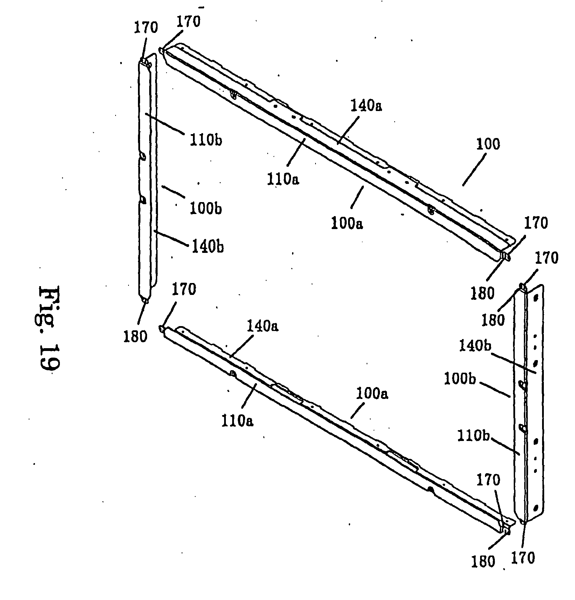

Referring to Fig. 19, reference numeral 100 represents the outer frame made from the molded component of a metal thin plate, which encases the periphery of the liquid crystal display panel L. The outer frame is formed in the shape of a picture frame by connecting a pair of long-sided frames 100a, 100a encasing the upper and lower periphery of the liquid crystal display panel L to a pair of short-sided frames 100b, 100b encasing the right and left periphery of the liquid crystal display panel L.

By fastening the upper surface portions 110a, 110a of the long-sided frames 100a, 100a and the upper surface portions 110b, 110b of the short-sided frames 100b, 100b by means of screws 15e to the side walls formed by cutting and bending the side edge of the reinforcing frames 6 and the reinforcing frames 7 (in the manner described above by reference to Fig. 4), the liquid crystal display panel L is fixed between the corresponding upper surface portions of the side edge 62a of the reinforcing frames 6, and the short side 72 of the reinforcing frames 7. Further, the side surface portions 140a, 140a of the long-sided frames 100a, 100a and the side surface portions 140b, 140b of the short-sided frames 100b, 100b are fastened to the sides of the reinforcing frames 6 and the reinforcing frames 7 by means of screws 15d.

Further, as shown in Fig. 19, connecting pieces 170 are integrally formed by bending each end of the long-sided frames 100a, 100a and the short-sided frames 100b, 100b, and a pair of screw holes 180 are severally formed to accommodate the connecting pieces 170. Note that the number and the array direction of the screw holes 180 is not restricted as provided for in the above-described embodiment, but the number may be one or three or more.

Further, a so-called direct type of lamp chamber is formed inside the main body case 3 housing a plurality of linear light source lamps 42 consisting of cold cathode fluorescent tubes, hot cathode fluorescent tubes and the like, and the reflective plate 41 is installed on the inner surface of the main body case 3.

Consequently, when assembling the liquid crystal display panel L, the light-collecting sheet, such as the light diffusion plate 11 is placed on the opening 30a after the reflective plate 41 and the lamps 42 are installed in the main body case 3, and the reinforcing frames 6 and the reinforcing frames 7 are fastened to the side walls of the main body case 3 so as to press the sheets. Then, the liquid crystal display panel L is placed on the reinforcing frames 6 and the reinforcing frames 7, the side surface portions 140a, 140a of the long-sided frames 100a, 100a and the side surface portions 140b, 140b of the short-sided frames 100b, 100b are fastened to the reinforcing frames 6 and the reinforcing frames 7 by means of screws so as to secure them, and the upper surface portions 110a, 110a of the long-sided frames and the upper surface portions 110b, 110b of the short-sided frames are fastened to the reinforcing frames 6 and the reinforcing frames 7 by means of screws in the same manner, the liquid crystal display panel L is thereby installed, while the connecting pieces of the long-sided frames 100a, 100a and the short-sided frames 100b, 100b are fastened by means of screws on the screw holes 180, and they are connected with each other at corners.

Note that the liquid crystal display device 10C is constituted such that the connecting pieces 170 are fastened by screws in front, so that no gap is created between the long-sided frames 100a, 100a and the short-sided frames 100b, 100b and the supporting means such as the reinforcing frames 7, and the screws can be easily fastened. Further, when the screw holes 180 are made slightly larger, it is possible to adjust the connection state of the long-sided frames 100a, 100a and the short-sided frames 100b, 100b to correct any dimensional error in forming them, and the deformation of each frame 100a, 100a, 100b, 100b due to any such dimensional error can be effectively prevented.

The liquid crystal display device 10C, does not require the provision of gaps for absorbing any dimensional error between the periphery of the reinforcing frames 6 and the reinforcing frames 7, which are the supporting means, and the corresponding side surface portions 140a, 140a, 140b, 140b of the long-sided frames 100a, 100a and the short-sided frames 100b, 100b. Even if screws are used to fasten them, the long-sided frames 100a, 100a or the short-sided frames 100b, 100b are not deformed, there being no stress applied on both sets of frames, since the fastened portions of each frame 100a, 100a, 100b, 100b are deformed inwardly. Accordingly, there is no adverse effect to the quality of display of the liquid crystal display panel L occasioned by stress and the dimensional accuracy thereof is thereby improved.

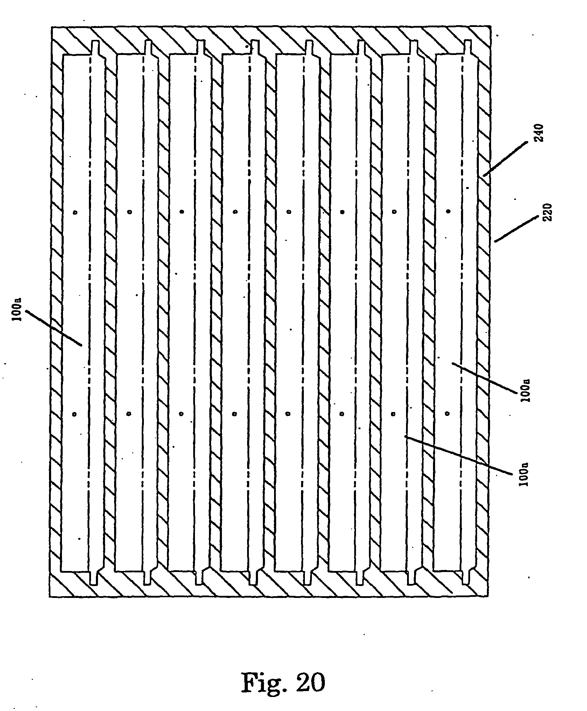

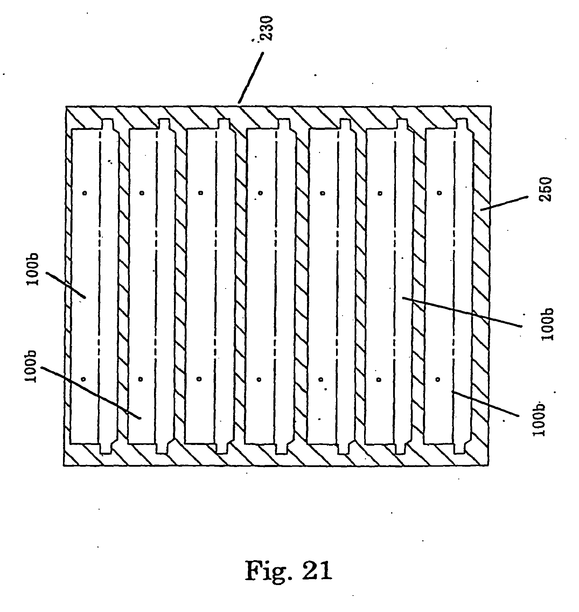

On the other hand, in making the long-sided frames 100a, 100a and the short-sided frames 100b, 100b, flat-plate-shaped metal plate materials 220 and 230 having dimensions suitable for die-cutting are prepared in the manner shown in Figs. 20 and 21, for example, and the frames are die-cut and formed at intervals by presswork and the like. In this manner, waste material portions marked by slant lines 240, 250 are drastically reduced, and lower production cost by reducing the cost of material can be achieved.

Note that the amount of material and array of each frame 100a, 100a, 100b, 100b are not limited to those shown in Figs. 20 and 21, but the long-sided frames 100a, 100a and the short-sided frames 100b, 100b may be arrayed vertically and horizontally, for example, and may therefore be constituted by die-cutting from one plate material.

## Claims

1. A liquid crystal display device (10, 10A, 10B, 10C), comprising:
a U-shaped main body case (3) having a bottom wall (30) and two opposing side walls (31) which are provided at two edges of the bottom wall and perpendicular to the bottom wall, whereas at the two remaining edges of the bottom wall, open portions (32) without any side walls are present;
a backlight unit (4) housed in the U-shaped main body case (3);
an optical member (1) having a substantially rectangular shape;
a liquid crystal display panel (L) adapted to receive light from the backlight unit through the optical member (1); and wherein
said optical member (1) is placed on steps formed on both side walls (31) of the U-shaped main body case (3), which steps are substantially parallel to the bottom wall, while the optical member (1) covers the backlight unit (4); **characterized in that**
the outer periphery of the optical member (1) is encased in a frame formed of a plurality of reinforcing frame pieces (6, 7) that are joined at positions corresponding to the corners of the optical member so as to form a picture frame.

2. The liquid crystal display device (10A) according to claim 1, wherein said reinforcing frame pieces (6, 7) have a light leakage preventive structure (E, F) where the surface side edge of the outer periphery of the optical member (1) is covered by the said reinforcing frames (6, 7).

3. The liquid crystal display device (10A) according to claim 2, wherein said reinforcing frame pieces are connected at joints portions so as to form the picture frame and the joint portions are provided with light leakage preventive structures (E, F) where the end portions of the reinforcing frame pieces (6, 7) come into contact to each other.

4. The liquid crystal display device (10B) according to any one of claims 1 to 3, wherein a transparent thick reinforcing plate (8) is disposed on the rear surface of said optical member (1).

5. The liquid crystal display device (10C) according to any one of claims 1 to 3, wherein said liquid crystal display panel (L) is placed on an assembly encased by said reinforcing frame pieces (6, 7), and the liquid crystal display panel (L) is affixed to said U-shaped main body case (3) by an outer frame (100) divided into several parts (100a, 100b).

6. The liquid crystal display device (10, 10A, 10B, 10C) according to claim 1, wherein the open portions (32) of the main body case (3) form spaces (33) in which lamp-supporting stages (43) of the said backlight unit (4) are disposed, a middle member (5) is disposed on the lamp-supporting stages (43) so as to close the open portions (32) of the U-shaped main body case (3), and said optical member (1) is affixed to the U-shaped main body case (3) by said reinforcing frame pieces (6, 7).

## Patentansprüche

1. Flüssigkristall-Anzeigeeinrichtung (10, 10A, 10B, 10C) mit:
einem U-förmigen Hauptkörpergehäuse (3) mit einer Bodenwand (30) und zwei gegenüberliegenden Seitenwänden (31), die an zwei Kanten der Bodenwand und rechtwinklig zu der Bodenwand vorgesehen sind, wohingegen an den beiden verbleibenden Kanten der Bodenwand offene Bereiche (32) ohne jegliche Seitenwände vorhanden sind;
einer in dem U-förmigen Hauptkörpergehäuse (3) untergebrachten Gegenlichteinheit (4);
einem optischen Element (1) mit einer im Wesentlichen rechteckigen Gestalt;
einer Flüssigkristall-Anzeigetafel (L), die dazu ausgestaltet ist, Licht von der Gegenlichteinheit durch das optische Element (1) hindurch zu empfangen,
wobei das optische Element (1) auf Stufen platziert ist, die an beiden Seitenwänden (31) des U-förmigen Hauptkörpergehäuses (3) ausgeformt sind, welche Stufen im Wesentlichen parallel zu der Bodenwand sind, während das optische Element (1) die Gegenlichteinheit (4) abdeckt;
**dadurch gekennzeichnet, dass**
der Außenumfang des optischen Elements (1) in einem Rahmen eingeschlossen ist, der aus mehreren Verstärkungsrahmenstücken (6, 7) ausgebildet ist, welche an Positionen, die den Ecken des optischen Elements entsprechen, miteinander verbunden sind, um so einen Bilderrahmen zu bilden.

2. Flüssigkristall-Anzeigeeinrichtung (10A) nach Patentanspruch 1, bei welcher die Verstärkungsrahmenelemente (6, 7) eine Struktur (E, F) zum Verhindern des Ausströmens von Licht haben, wo die oberflächenseitige Kante des Außenumfang des optischen Elements (1) mittels der Verstärkungsrahmen (6, 7) abgedeckt ist.

3. Flüssigkristall-Anzeigeeinrichtung (10A) nach Patentanspruch 2, bei welcher die Verstärkungsrahmenelemente an Verbindungsbereichen so verbunden sind, dass sie den Bilderrahmen bilden, und die Verbindungsbereiche mit Strukturen (E, F) zum Verhindern des Auslaufens von Licht versehen sind, wo die Endbereiche der Verstärkungsrahmenelemente (6, 7) in Kontakt miteinander geraten.

4. Flüssigkristall-Anzeigeeinrichtung (10B) nach einem der Patentansprüche 1 bis 3, bei welcher eine transparente dicke Verstärkungsplatte (8) auf der rückwärtigen Oberfläche des optischen Elements (1) vorgesehen ist.

5. Flüssigkristall-Anzeigeeinrichtung (10C) nach einem der Patentansprüche 1 bis 3, bei welcher die Flüssigkristall-Anzeigetafel (L) auf einer Anordnung platziert ist, die von den Verstärkungsrahmenelementen (6, 7) eingeschlossen ist, und die Flüssigkristall-Anzeigetafel (L) an dem U-förmigen Hauptkörpergehäuse (3) durch einen äußeren Rahmen (100) befestigt ist, der in mehrere Teile (100a, 100b) unterteilt ist.

6. Flüssigkristall-Anzeigeeinrichtung (10, 10A, 10B, 10C) nach Patentanspruch 1, bei welcher die offenen Bereiche (32) des Hauptkörpergehäuses (3) Räume (33) bilden, in welchen Lampenstützstufen (43) der Gegenlichteinheit (4) vorgesehen sind, ein mittleres Element (5) auf den Lampenstützstufen (43) vorgesehen ist, so dass es die offenen Bereiche (32) des U-förmigen Hauptkörpergehäuses (3) schließt, und das optische Element (1) an dem U-förmigen Hauptkörpergehäuse (3) durch die Verstärkungsrahmenelemente (6, 7) befestigt ist.

## Revendications

1. Dispositif d'affichage à cristaux liquides (10, 10A, 10B, 10C), comprenant :
un boîtier de corps principal en forme de U (3) avec une paroi de fond (30) et deux parois latérales opposées (31) qui sont disposées sur deux bords de la paroi de fond et perpendiculaires à la paroi de fond, tandis que sur les deux bords restants de la paroi de fond, sont présentes des portions ouvertes (32) sans aucune paroi latérale ;
une unité d'éclairage arrière (4) logée dans le coffret de corps principal en forme de U (3) ;
un élément optique (1) ayant une forme sensiblement rectangulaire ;
un panneau d'affichage à cristaux liquides (L) apte à recevoir la lumière à partir de l'unité d'éclairage arrière à travers l'élément optique (1) ; et dans lequel
ledit élément optique (1) est placé sur les deux gradins formés sur les deux parois latérales (31) du coffret de corps principal en forme de U (3) qui sont des gradins sensiblement parallèles à la paroi de fond, tandis que l'élément optique (1) recouvre l'unité d'éclairage arrière (4) ;
**caractérisé en ce que**
la périphérie extérieure de l'élément optique (1) est logée dans un châssis formé d'une pluralité de pièces de châssis de renforcement (6, 7) qui sont réunis aux positions correspondant aux coins de l'élément optique, de façon à former un cadre d'image.

2. Dispositif d'affichage à cristaux liquides (10A) selon la revendication 1, dans lequel les parties de cadre de renforcement (6, 7) sont une structure empêchant la fuite de lumière (E, F), dans laquelle le bord latéral de surface de la périphérie extérieure de l'élément optique (1) est recouvert par des cadres de renforcement (6, 7).

3. Dispositif d'affichage à cristaux liquides (10A) selon la revendication 2, dans lequel lesdites pièces de cadre de renforcement sont reliées en des portions de jonction, de façon à former le cadre d'image et les portions de jonction sont munies de structures empêchant la fuite de lumière (E, F), dans lesquelles les portions d'extrémité des parties de cadre de renforcement (6, 7) viennent en contact entre elles.

4. Dispositif d'affichage à cristaux liquides (10B) selon l'une quelconque des revendications 1 à 3, dans lequel une plaque de renforcement épaisse transparente (8) est disposée sur la surface arrière dudit élément optique (1) .

5. Dispositif d'affichage à cristaux liquides (10C) selon l'une quelconque des revendications 1 à 3, dans lequel ledit panneau d'affichage à cristaux liquides (L) est placé sur un ensemble incorporé par les parties de cadre de renforcement (6, 7) et le panneau d'affichage à cristaux liquides (L) est fixé sur ledit coffret de corps principal en forme de U (3) par un cadre extérieur (100) divisé en plusieurs parties (100a, 100b).

6. Dispositif d'affichage à cristaux liquides (10, 10A, 10B, 10C) selon la revendication 1, dans lequel les parties ouvertes (32) du coffret de corps principal (3) forment des espaces (33) dans lesquels les gradins de support de lampe (43) de ladite unité d'éclairage arrière (4) sont disposés, un élément médian (5) est disposé sur les échelons de support de lampe (43), de façon à fermer les portions ouvertes (32) du coffret de corps principal en forme de U (3), et ledit élément optique (1) est fixé sur le coffret de corps principal en forme de U (3) par des parties de cadre de renforcement (6, 7).
